# EUROPEAN PATENT SPECIFICATION

(11) **EP 4 701 096 B1**
(45) Date of publication and mention of the grant of the patent: **12.08.2026**
(21) Application number: 24195993.1
(22) Date of filing: 22.08.2024
(51) Int. Cl.: H04B 7/185

(54) **METHODS, COMPUTER PROGRAMS, AND APPARATUSES FOR A NON-TERRESTRIAL BASE STATION AND A TERRESTRIAL BASE STATION.**
VERFAHREN, COMPUTERPROGRAMME UND VORRICHTUNGEN FÜR EINE NICHT TERRESTRISCHE BASISSTATION UND EINE TERRESTRISCHE BASISSTATION.
PROCÉDÉS, PROGRAMMES INFORMATIQUES ET APPAREILS POUR UNE STATION DE BASE NON TERRESTRE ET UNE STATION DE BASE TERRESTRE.

(43) Date of publication of application: 25.02.2026
(73) Proprietor: Deutsche Telekom AG, 53113 Bonn (DE)
(72) Inventor: BREITBACH, Johannes Markus, 53227 Bonn (DE); RASS, Jörg, 50859 Köln (DE); BRITSCH, Matthias, 53639 Königswinter (DE); STÖRMER, Wolfgang, 50374 Erftstadt (DE)
(74) Representative: 2SPL Patentanwälte PartG mbB

(56) References cited:
- EP-A1- 4 325 924
- US-A1- 2024 056 925
- US-A1- 2024 214 059

## Description

### Field

Examples relate to methods, computer programs, and apparatuses for a non-terrestrial base station and a terrestrial base station, more particularly, but not exclusively, to a concept for enabling direct communication for managing handover of user equipment, UE, between terrestrial base stations and non-terrestrial base stations in a wireless communication system.

### Background

Wireless communication networks provide radio services for UEs, mostly organized in radio cells. Depending on the network deployment the radio cells may have different sizes. In practice, terrestrial mobile radio networks have coverage gaps between radio cells. There are several reasons for this. For example, mobile network users are very unevenly distributed geographically. Cities have high user densities, while rural areas have a very low number of users. From an economic point of view, mobile network operators are therefore primarily expanding their networks in cities and towns, while coverage gaps remain in sparsely populated or even uninhabited areas. In addition, mountains and valleys, large buildings and wooded areas cause shading. In shadowed regions, mobile coverage is significantly impaired or even impossible.

Hence, there is a motivation for 3D (3-dimensional) networks. As a ground-based infrastructure, terrestrial mobile networks are susceptible to outages due to defects in fiber optic connections, power failures or physical attacks. These drawbacks can be remedied by supplementing the terrestrial network (TN) with flying network elements or a non-terrestrial network (NTN). The non-terrestrial network elements include drones flying at low altitudes (Low Altitude Platform Systems, LAPS), stratospheric aircraft (High Altitude Platform Systems, HAPS) and LEO (Low Earth Orbit), MEO (Medium Earth Orbit) and GEO (Geostationary Earth Orbit) satellites. This expansion turns a terrestrial network into a 3D network. Due to their flight altitude, non-terrestrial network elements are much less affected by the shadowing effects described above than base stations on the ground and can also cover large contiguous areas. In addition, they are independent of the power grid and less susceptible to physical attacks, making a 3D network more resilient to outages than purely terrestrial networks.

With the existing TN networks, the infrastructure is stationary. The neighboring relationships between base station locations, the alignment of the antennas and the resulting geographical radio cells, the frequency assignment to radio cells, etc. can be planned and statically configured. This configuration can be carried out manually or automatically using the Self-Organizing Networks (SON) function. The static situation and correspondingly rare configuration changes as well as a small number of neighboring cells keep the effort low.

NTN networks break through this principle in two ways: LEO and MEO satellites move both relative to the ground and relative to each other. This results in a dynamically changing network structure and topology. With LEO satellites, the neighborhood relationships to terrestrial base stations change within just a few minutes. Furthermore, the radio cells of an NTN base station become larger with increasing altitude. As a result, non-terrestrial radio cells may cover several hundred terrestrial radio cells. This results in a very large number of neighboring relationships between non-terrestrial and terrestrial base stations. The high number of neighborhood relationships and their short validity period make automatic and manual configuration difficult.

Document US 2004/0056925 A1 relates to mobility management across multiple subsystems of wireless network devices, such as base-stations, drones, balloons, planes and satellites. In particular, the maintenance of user experiences across the subsystems is addressed. Aspects of the disclosure relate to integrating terrestrial networks with non-terrestrial networks and establishing mechanisms for managing mobility of user devices as the devices travel from a service area defined by a connection with a terrestrial network to a service area defined by a connection with a non-terrestrial network or vice versa.

Document EP 4 325 924 A1 describes a communication control device and method for controlling a terrestrial network and a non-terrestrial network.

### Summary

It is a finding of the present disclosure that a terrestrial base station may be extended with a satellite receiver or with a complete satellite terminal, to receive signals from or establish a connection between the satellite and the terrestrial base station and to optionally transmit control information between the control plane functions of the satellite and the terrestrial base station via this connection. This solution is equally applicable to satellites and atmospheric platforms. The satellite terminal connected to the terrestrial base station may also be referred to below as an NTN terminal and a non-terrestrial base station is used instead of a satellite.

The invention is defined in the independent claims. Further aspects are disclosed in the dependent claims.

### Brief description of the Figures

Some examples of apparatuses, methods, and/or computer programs will be described in the following by way of example only, and with reference to the accompanying figures, in which
Fig. 1 shows a block diagram of an example of a method for a terrestrial base station;
Fig. 2 shows a block diagram of an example of a method for a non-terrestrial base station;
Fig. 3 shows block diagrams of apparatuses for a terrestrial base station and a non-terrestrial base station;
Fig. 4 illustrates another example scenario in a mobile communication system; and
Fig. 5 depicts a protocol stack in an example.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

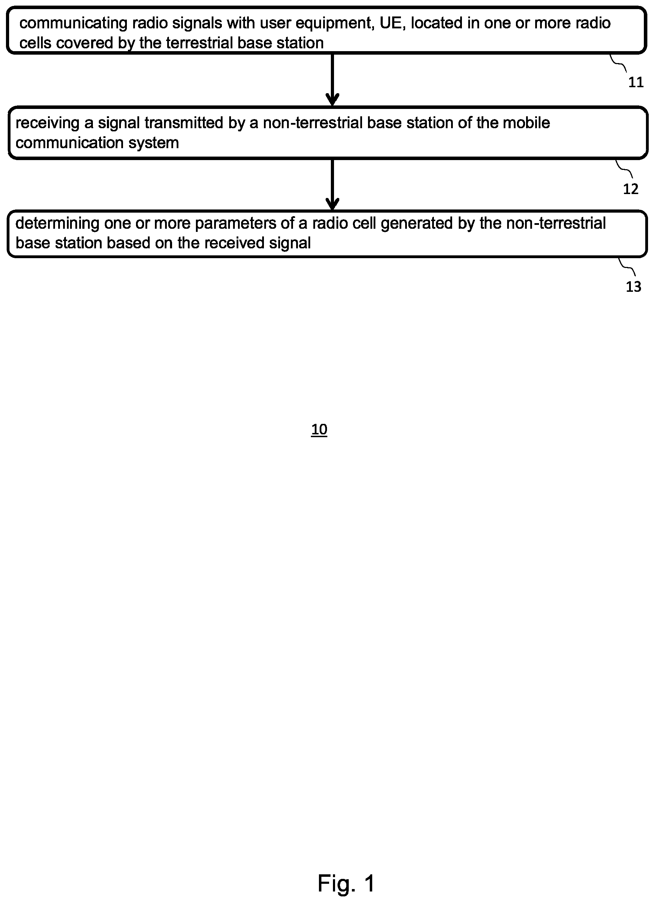

Fig. 1 shows a method 10 for a terrestrial base station of a mobile communication system. The method comprises communicating 11 radio signals with user equipment, UE, located in one or more radio cells covered by the terrestrial base station. The method 10 further comprises receiving 12 a signal transmitted by a non-terrestrial base station of the mobile communication system and determining 13 one or more parameters of a radio cell generated by the non-terrestrial base station based on the received signal.

A base station in a cellular network communicates a variety of radio parameters to ensure efficient and reliable communication with mobile devices. These parameters may, for example, comprise frequency and channel information such as a carrier frequency used by the base station, channel bandwidth or physical cell identifier (PCI), which identifies the physical cell in a group of cells within the network. In examples such radio parameters may be read from the signals transmitted by the non-terrestrial base station. For example, based on these parameters the non-terrestrial base station or a cell of the non-terrestrial base station may be identified. Once identified the non-terrestrial base station can be addressed, e.g. by means of its transport network address. For example, such address may be communicated explicitly, or it may be looked up by means of the identification enabled by the radio parameters. The address may identify the non-terrestrial base station, a gNodeB or a radio cell from which the signal was received at the terrestrial base station, e.g. as a protocol instance address such as an Xn instance or inter-base station link/interface as will be detailed subsequently. Hence, the determining 13 may comprise determining an address or transport network address of the non-terrestrial base station. To enable communication between the terrestrial base station and the non-terrestrial base station the method at the terrestrial base station may comprise establishing a link to the non-terrestrial base station based on the address.

In some examples such link may be established using a core and/or transport network (TN/CN) of the mobile communication system, i.e. indirectly. In other examples a direct radio link may be established with the non-terrestrial base station and a communication with the non-terrestrial base station may use the direct radio link. In a mobile communication system, the core network and the transport network serve distinct functions. The core network is the central part, responsible for managing and routing data and voice traffic, and includes high-capacity servers and switches. Its functions include control and signaling, subscriber data management, mobility management, session management, and policy enforcement. Some key components of the core network may be a Mobile Switching Center (MSC), Serving GPRS Support Node (SGSN), Gateway GPRS Support Node (GGSN), Mobility Management Entity (MME), Serving Gateway (S-GW), Packet Data Network Gateway (P-GW), Home Subscriber Server (HSS), and Policy and Charging Rules Function (PCRF).

On the other hand, the transport network provides the underlying infrastructure for data transmission between network elements like base stations and core network components. It handles data transmission, interconnection, backhaul, aggregation, and ensures redundancy and resilience. Components of the transport network include microwave links, fiber optic cables, routers, switches, and Dense Wavelength Division Multiplexing (DWDM) technology.

The core network's purpose is management, control, and service provision, involving operations such as authentication, session management, and mobility management. The transport network focuses on data transmission and connectivity, consisting of physical transmission mediums and network devices to move data efficiently between network elements. Both networks work together to provide seamless mobile communication services. If the link between the terrestrial base station and the non-terrestrial base station is established in examples, this may be by means of the transport network, e.g. using IP- or transport network addressing or through a control mechanism logically provided by the CN to interconnect the base stations. It is to be noted that the CN or TN also communicates with the non-terrestrial base station using a bidirectional ground-to-base-station wireless link.

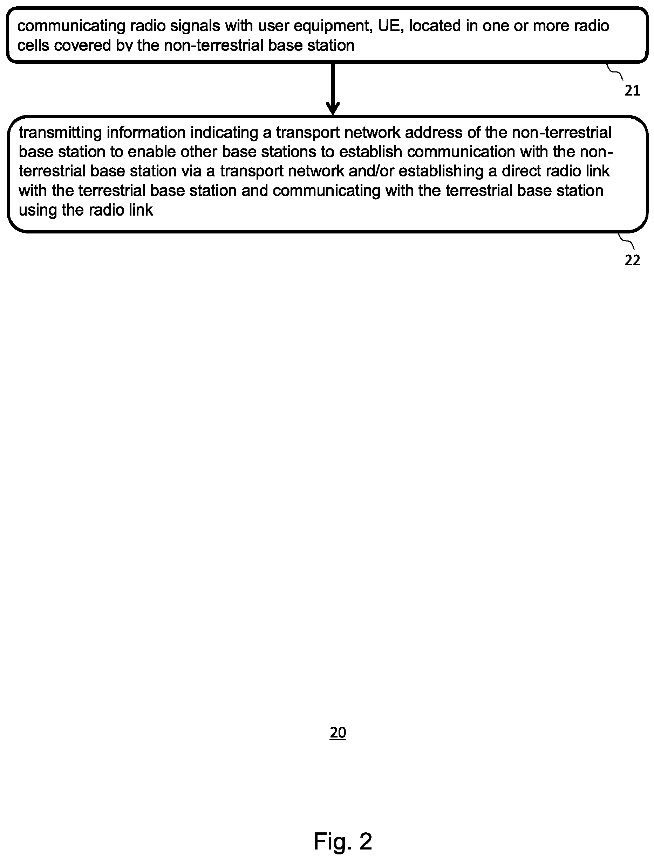

Fig. 2 shows a block diagram of an example of a method 20 for a non-terrestrial base station. The method 20 comprises communicating 21 radio signals with user equipment, UE, located in one or more radio cells covered by the non-terrestrial base station. The method 20 further comprises transmitting 22 information indicating a transport network address of the non-terrestrial base station to enable other base stations to establish communication with the non-terrestrial base station via a transport network. Additionally or alternatively the method 20 may comprise establishing a direct radio link with the terrestrial base station and communicating with the terrestrial base station using the radio link.

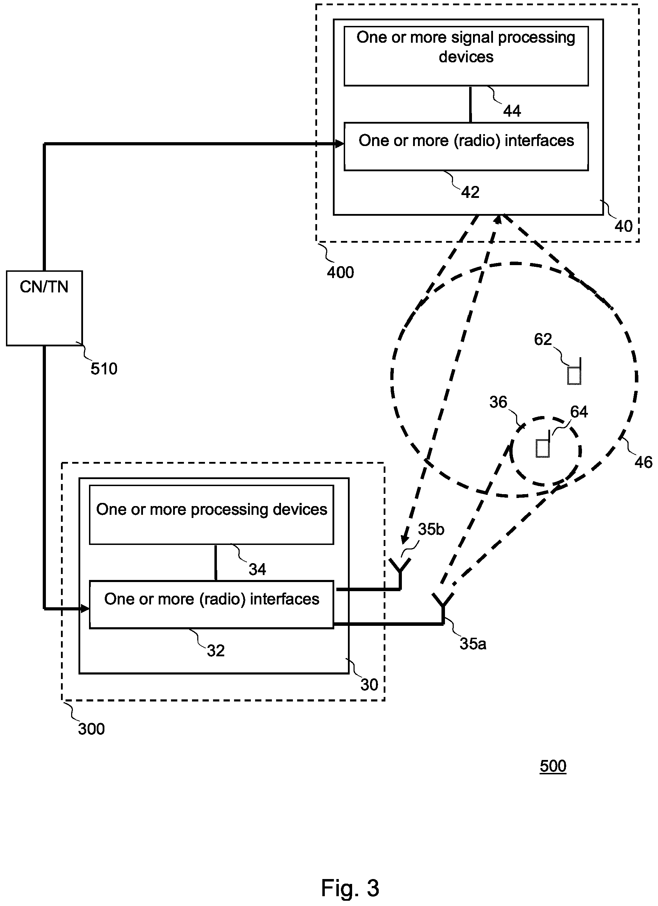

Fig. 3 shows block diagrams of apparatuses 30, 40 for a terrestrial base station 300 and a non-terrestrial base station 400. As shown in Fig. 3 the apparatus 30 for a terrestrial base station 300 comprises one or more radio interfaces 32 configured to communicate in the mobile communication system 500. The one or more radio interfaces 32 are coupled to one or more signal processing devices 34, which are configured to process signals communicated in the mobile communication system using the one or more interfaces 32. The one or more signal processing devices 34 are further configured to perform one of the methods 10 for the terrestrial base station 300 as described herein. Fig. 3 also illustrates a terrestrial base station 300, which comprises the apparatus 30. The terrestrial base station 300 is shown in broken lines as it is optional from the perspective of the apparatus 30.

As also shown in Fig. 3, another example is an apparatus 40 for a non-terrestrial base station 400, which comprises one or more interfaces 42 configured to communicate radio signals in the mobile communication system 500. The one or more interfaces 42 are coupled to one or more signal processing devices 44, which are configured to process signals communicated in the mobile communication system using the one or more interfaces 42. The one or more signal processing devices 44 are further configured to perform one of the methods 20 for the non-terrestrial base station 400 as described herein. Fig. 3 also illustrates a non-terrestrial base station 400, which comprises the apparatus 40. The non-terrestrial base station 400 is shown in broken lines as it is optional from the perspective of the apparatus 40.

As also indicated in Fig. 3 the non-terrestrial base station 400 provides a radio cell 46 (offers radio services in cell 46) and the terrestrial base station 300 provides a radio cell 36 (offers radio services in cell 36), which lies inside the radio cell 46. The non-terrestrial base station 400 can therefore serve UEs 62, 64 inside radio cell 46. As shown in Fig. 3 UE 64 is also located in radio cell 36 provided by the terrestrial base station 300. The terrestrial base station 300 is configured to receive a downlink (DL) signal from the non-terrestrial base station 400. This can be achieved by means of an according receive antenna. In some further examples the terrestrial base station 300, the apparatus 30, respectively, may also comprise transmitting means to bidirectionally communicate with the non-terrestrial base station 400. Fig 3 therefore also illustrates an example of a terrestrial base station 300, which comprises the apparatus 30 and which comprises at least a first antenna 35a configured to serve users 64 in a radio cell 36 covered by the terrestrial base station 300 and which further comprises at least a second antenna 35b configured to receive signals from a non-terrestrial base station 400 directly, which will be further detailed subsequently. The second antenna 35b may be integrated in the terrestrial base station 300 or it may be separated from the terrestrial base station 300 in a terminal or UE, which is coupled to the terrestrial base station 300. In Fig. 3 the solid arrow shows the general communication between the terrestrial base station apparatus 30 and the non-terrestrial base station apparatus 40, which may be indirect via a transport network (TN) routing or through a core network (CN) 510 of the mobile communication system 500 not shown in Fig. 3. The arrow in broken lines in Fig. 3 shows an optional direct radio link between the apparatuses 30 and 40. The terrestrial base station 300 may then determine that UE 64, which is served by the non-terrestrial base station 400, could as well be served by the terrestrial base station 300, because of the overlapping coverage regions 36, 46. The terrestrial base station 300 may then inform the non-terrestrial base station 400 via the CN/TN 510 or directly if the direct link is established.

The terrestrial base station 300 can therefore receive signals from the UE 64 although the signals are directed to the non-terrestrial base station 400. From the received signal the terrestrial base station 300 can determine information for identifying the UE 64 and informs the non-terrestrial base station 400 about the UE 64. The non-terrestrial base station 400 receives the information from the terrestrial base station 300. The information indicates that the terrestrial base station 300 is capable of serving the UE 64 currently communicating with the non-terrestrial base station 400. The non-terrestrial base station 400 then informs the UE 64 about the terrestrial base station 300. The non-terrestrial base station 400 communicates radio signals with the UE 64 located in its radio cell 46. Another example is a mobile communication system 500, which comprises the terrestrial base station 300 and the non-terrestrial base station 400.

As illustrated in Fig. 3, the respective one or more signal processing devices 34, 44 are coupled to the respective one or more interfaces 32, 42. The one or more interface 32, 42 may serve as interface for communicating in the communication system 500. The one or more interfaces 32, 42 may correspond to one or more inputs and/or outputs for receiving and/or transmitting information, which may be in digital (bit) values or analog according to a specified code or protocol, within a module, between modules or between modules of different entities. For example, an interface may comprise interface circuitry configured to receive and/or transmit information. In examples an interface may comprise any means for obtaining, receiving, transmitting or providing analog or digital signals or information, e.g., any connector, contact, pin, register, input port, output port, conductor, lane, etc., which allows providing or obtaining a signal or information. The one or more interfaces 32, 42 may be configured to communicate (transmit, receive, or both) in a wireless and/or wired manner and it may be configured to communicate, i.e., transmit and/or receive signals, information with further internal or external components. The one or more interfaces 32, 42 or the apparatuses 30, 40 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplex-ers, one or more filters or filter circuitry, one or more converters, one or more mixers, accordingly adapted radio frequency components, one or more antennas, etc. For example, the respective one or more interfaces 32, 42 may enable radio communication with UEs and communication between base stations, which can be directly and/or indirectly, wired and/or wireless, respectively.

The one or more (signal) processing devices 34, 44 may be implemented using one or more processing units, one or more circuitries, any means for processing, such as a processor, a computer or a programmable hardware component being operable with accordingly adapted software. In other words, the described function of the one or more processing devices 34, 44 may as well be implemented in software, which is then executed on one or more programmable hardware components. Such hardware components may comprise a general-purpose processor, a Digital Signal Processor (DSP), a microcontroller, etc.

In examples the non-terrestrial base station 400 may be implemented in an aircraft, a satellite or a High-Altitude Platform System (HAPS). A network entity, e.g. a non-terrestrial base station (implemented at a satellite, platform, airplane, etc.) or a terrestrial base station 300, may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, HAPS, etc. **In** case of a moving implementation in a satellite, an airplane, etc. the link towards a core network of the communication system may also be implemented in a wireless manner.

The mobile communication system 500 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, etc. A wireless communication device, e.g. the UE and in some examples also an NTN device as will be detailed below, can be registered or associated with at least one cell (e.g., the network entity), e.g., it can be associated to a cell such that data can be exchanged between the network and the mobile in the coverage area of the associated cell using a dedicated channel, connection or link.

**In** general, the UE may be a communication device that is capable of communicating wirelessly. **In** particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a laptop computer, a tablet computer, etc. In examples of the present disclosure a UE may be comprised in or coupled to a terrestrial base station 300, for example, such a coupling may be wired (e.g. via USB, Universal Serial Bus) or wireless. The UE may be used to communicate with the non-terrestrial base station 400 via a cellular link. It is therefore also referred to as non-terrestrial-network device (NTN-device). For example, the UE may be a wireless WAN (Wide Area Network) device, e.g. a router, which connects a LAN (Local Area Network) coupled to the terrestrial base station 300 via a cellular link to the non-terrestrial base station 400.

For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

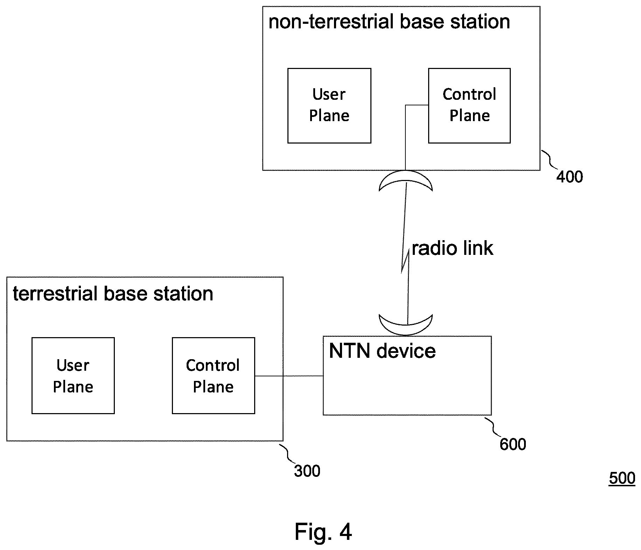

Fig. 4 illustrates another example scenario in a mobile communication system 500. Fig. 4 shows a terrestrial base station 300 and a non-terrestrial base station 400. Both comprise processing means for user plane data and control plane data. The terrestrial base station 300 is coupled to an NTN device 600, which serves the terrestrial base station 300 to receive and/or transmit signals from/to the non-terrestrial base station 400. For example, the NTN-device 600 is a UE, which communicates with the non-terrestrial base station 400 via a cellular link and with the terrestrial base station 300 via any other link, be it wired (USB, Ethernet, etc.) or wireless (Wireless LAN, Bluetooth, Near Field Communication, etc.). The NTN device 600 may be part of the one or more interfaces 32 in the apparatus 30 of the terrestrial base station 300. For example, the NTN device 600 comprises a receiver or transceiver chip (e.g. a 5G chip) capable of receiving/transmitting signals from/to the non-terrestrial base station 400. The NTN device 600 is configured to establish a radio link to the non-terrestrial base station 400 and therefore serves the terrestrial base station 300 as a sort of modem.

The connection between terrestrial and non-terrestrial base stations 300, 400 is established via NTN terminal device 600. The antennas of terrestrial macro cells are usually located outdoors in exposed locations, e.g. on roofs, radio towers or antenna masts. This means that there is usually a line of sight from such antenna sites to the non-terrestrial base station 400 that serves the region around the antenna site. The NTN device 600 is mounted at the antenna site. It may be equipped with an additional receiver for the DL of the non-terrestrial base station 400, optionally also with a transmitter for the UL to the non-terrestrial base station 400. This receiver is connected to the terrestrial base station 300 of the antenna location so that the terrestrial base station 300 can receive the DL signals of the non-terrestrial base station 400 unidirectionally and, for example, read the broadcast channel of the non-terrestrial base station 400. If the terrestrial base station 300 is extended with an NTN terminal 600 with receiver and transmitter instead of receiver only, it can also communicate bidirectionally with the non-terrestrial base station 400.

For a unidirectional connection from the non-terrestrial base station 400 to the terrestrial base station 300, the terrestrial base station 300 is extended with the receiver section of an NTN terminal device 600. The antenna of this NTN terminal device 600 is mounted on the antenna mast, for example, in such a way that there is a line of sight to the non-terrestrial base station 400. In other example the antenna of the NTN device 600 may be mounted nearby in a way that a (wired) connection to the terrestrial base station 300 is possible. The other components of the NTN receiver 600 can also be mounted on the mast, nearby, or integrated into the terrestrial base station 300, for example.

With such a connection, the terrestrial base station 300 can receive the DL of the non-terrestrial base station 400. However, the NTN terminal device 600 cannot register or log on to the non-terrestrial base station 400, as this would require bidirectional communication. Accordingly, no SIM card is required in the NTN terminal device 600. In particular, the terrestrial base station 300 can receive the broadcast channel of the non-terrestrial base station 400 and read out all configuration parameters for the satellite radio cell around the antenna location of the terrestrial base station 300.

As an extension to the current 3GPP mobile radio standard, additional parameters could be sent via the broadcast channel. For example, the non-terrestrial base station 400 could use it to communicate its transport network address. The terrestrial base station 300 can then read this transport network address from the broadcast channel and establish a connection to the non-terrestrial base station 400 via the transport network (corresponding to the Xn interface in the 5G NR standard of the 3GPP). The method 10 at the terrestrial base station then further comprises establishing an inter-base station - interface link to the non-terrestrial base station 400. The method 20 at the non-terrestrial base station 400 then comprises establishing an inter-base station -interface link to the terrestrial base station 300. As indicated in Fig. 3 such transport network connection or link may be use the CN/TN 510, which at some point has another wireless connection to the non-terrestrial base station 400 for control and pay-load data exchange.

For a bidirectional connection from the satellite 400 to the terrestrial base station 300, the terrestrial base station 300 is extended with transmitter and receiver sections of an NTN terminal device 600. The antenna of this NTN terminal 600 is attached to the antenna mast or it is implemented nearby and coupled to terrestrial base station 300. The other components of the NTN terminal 600 can also be mounted on the mast, nearby or integrated into the terrestrial base station 300, for example. This NTN terminal 600 can also be equipped with a SIM card from the satellite network operator. This allows it to log on to the non-terrestrial base station 400 and establish a bidirectional connection. From the perspective of the non-terrestrial base station 400 the NTN device 600 in this example may behave as a UE.

This bidirectional connection can be used for various purposes:
- A direct connection can be established between the terrestrial base station 300 and the non-terrestrial base station 400 to enable inter base station interfacing, e.g. in accordance with the Xn interface of the 5G NR standard of the 3GPP (unlike in the unidirectional case without a detour via the terrestrial transport network). The entire functionality provided for this interface in the 3GPP standard can then be realized (provided the data rate on the connection between the NTN terminal device and the satellite is sufficient for this).
   For example, the inter-base station interface link is a Radio Resource Control, RRC, signaling radio bearer and Xn-interface messages as inter base station interface messages are encapsulated in RRC messages according to the 3rd Generation Partnership Project, 3GPP, provisions. A current version of RRC is specified in 3GPP TS (Technical Specification) 38.331 V18.1.0 (2024-03), 3rd Generation Partnership Project, Technical Specification Group Radio Access Network, NR, Radio Resource Control (RRC) protocol specification (Release 18).
- The bidirectional connection can be used to coordinate frequency usage between non-terrestrial and terrestrial base stations 300, 400. If non-terrestrial and terrestrial base stations use neighboring frequency bands, it would be conceivable, for example, to dynamically change the allocation between the two frequency bands and thus adapt to changes in the traffic volume of the terrestrial base station and satellite. In general, the method 10 at the terrestrial base station and/or the method 20 at the non-terrestrial base station may comprise coordinating radio resource utilization with each other.
- The NTN terminal 600 can also measure the signal power of the received DL signal from the non-terrestrial base station 400 and send power control instructions back to the non-terrestrial base station 400. In the simplest case, these are the measured values themselves. Alternatively or additionally, the NTN terminal device 600 could also tell the non-terrestrial base station 400 whether and by how much it should change its transmission power. In this way, the transmission power of the non-terrestrial base station 400 can be regulated, e.g. to avoid interference with other systems using the same carrier frequency. Likewise, the method 20 at the non-terrestrial base station 400 may comprise coordinating radio resource utilization with the terrestrial base station 300. Hence the coordinating at the terrestrial base station 300 and/or the non-terrestrial base station 400 may be based on balancing a load and/or mitigating interference between the terrestrial base station 300 and the non-terrestrial base station 400. The coordinating can also comprise one or more feedback loops for controlling radio parameters at the non-terrestrial base station.

Protocol termination may take place in the non-terrestrial base station 400. In case of a normal bidirectional connection between an NTN terminal 600 and a non-terrestrial base station 400, user data is forwarded in the UL from the non-terrestrial base station 400 to the core network, which is usually located on the ground. To establish an Xn-connection (inter base station link/interface) between a terrestrial and a non-terrestrial base station 300, 400 as described here, it is advantageous to terminate the UL connection in the non-terrestrial base station 400 instead of forwarding the data sent by the NTN terminal 600 like normal user data to the core network on the ground and sending it back from there to the control plane of the non-terrestrial base station 400. Such a point-to-point connection from the NTN terminal device 600 to the non-terrestrial base station 400 without forwarding the data to the core network can be realized via an extension of the RRC protocol. The inter-base station interface link may be a Radio Resource Control, RRC, signaling radio bearer. Xn-interface messages, as an example for inter base station interface messages, may be encapsulated in RRC messages according to the 3rd Generation Partnership Project, 3GPP, provisions. More details on the Xn-interface can be found in 3GPP TS 38.423 V18.1.0 (2024-03), Technical Specification, 3rd Generation Partnership Project, Technical Specification Group Radio Access Network, NG-RAN, Xn application protocol (XnAP) (Release 18).

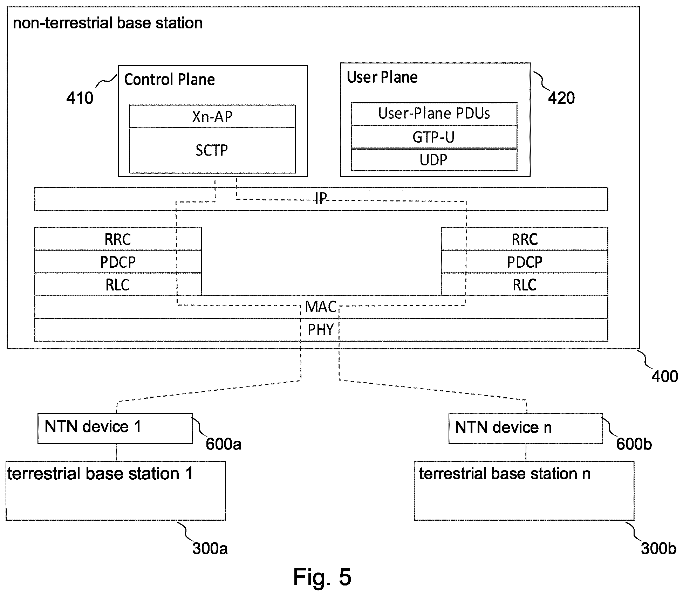

Fig. 5 depicts a protocol stack in an example. Fig. 5 shows a plurality of terrestrial base stations, represented by a first terrestrial base station 300a with first NTN device 600a and a second terrestrial base station 300b with a second terrestrial base station 600b. Potentially there can be any number of terrestrial base stations. The terrestrial base stations 300 a, b use their respective NTN devices 600a, b to communicate with a non-terrestrial base station 400. At the non-terrestrial base station 400 the protocol stack is shown, which includes a Physical layer (PHY), a Medium Access Control layer (MAC), Radio Link Control (RLC), Packet Data Convergence Protocol (PDCP), Radio Resource Control (RRC) and Internet Protocol (IP). All of these protocols may be in line with the 3GPP specifications or the specifications of any other communication system. As further illustrated in Fig. 5, there is a control plane 410 and a user plane 420. The control plane 410 comprises a Stream Control Transmission Protocol (SCTP) protocol entity, which guarantees delivery of signaling messages between an Access and Mobility Management Function (AMF) and 5G-AN (Access Network) node. The control plane 410 further comprises an Xn-AP entity. The user plane 420 comprises a User Datagram Protocol entity (UDP), a GPRS Tunnelling Protocol User Plane (GTP-U) entity, and a user-plane Packet Data Units (PDUs) entity.

Fig. 5 shows the protocol stack in the non-terrestrial base station 400, which is based on 3GPP 38.300, sections 4.4.2 and 4.3.2 (3GPP TS 38.300 V18.1.0 (2024-03), Technical Specification, 3rd Generation Partnership Project, Technical Specification Group Radio Access Network, NR, NR and NG-RAN Overall Description, Stage 2, (Release 18)). Two terrestrial base stations 300a, b are shown, both of which have their own NTN terminals 600a, b and their own Xn-connections to the non-terrestrial base station 400. The dashed lines show the paths of control plane messages of the two Xn-connections through the protocol stack. The Xn interface according to 3GPP 38.300, section 4.3.2 also has a user plane. In principle, user plane messages can also be exchanged between terrestrial and non-terrestrial base stations using the methods 10, 20 described herein, even if the RRC connection between the NTN terminal 600 and the non-terrestrial base station 400 actually belongs to the control plane and is therefore not intended for the transport of user plane messages of the Xn-connection in the sense of the 3GPP standard.

The same protocol layers for the control plane and the user plane of the Xn interface as described in 3GPP 38.800, sections 4.3.2.2 and 4.3.2.1 are located above the IP layers. The IP layer is also provided for in the 3GPP 38.800 standard and is used to enable a non-terrestrial base station to maintain several parallel Xn-connections to different terrestrial base stations. It must therefore contain a router that can forward data from the control plane of the non-terrestrial base station 400 to the desired terrestrial base station 300. In the invention described here, the IP router can and should be isolated from the rest of the satellite's transport network, i.e. the control plane of the non-terrestrial base station and the terminals of the terrestrial gNBs should form a self-contained IP network. For security reasons, the end devices of normal users are not allowed to support this Xn functionality at least in some examples and must remain outside. This has the welcome side effect that IP address assignment is very simple for such a small, local network.

Below the IP layer, the aforementioned extension of the RRC protocol is used to transport Xn data between the terminal device 600 and the IP router of the non-terrestrial base station 400. For this purpose, two procedures "UL Xn Information Transfer" and "DL Xn Information Transfer" are added to the RRC protocol. These two procedures have a similar functionality to the existing "UL Information Transfer" and "DL Information Transfer" procedures: The "UL Information Transfer" procedure transfers dedicated data from the end device (UE) to the gNB (base station), which then forwards it to the NAS (Non-Access Stratum). The "DL Information Transfer" procedure does the same in the opposite direction. In the same way, the new "UL Xn Information Transfer" procedure could transfer data provided to the NTN terminal 600 by the Xn-interface of the terrestrial base station 300 from the NTN terminal 600 to the non-terrestrial base station 400, where it is then transferred to the IP layer described above. The new "DL Xn Information Transfer" procedure could take over the data transfer from the IP layer of the non-terrestrial base station 400 to the NTN terminal device 600 in the same way, which then forwards this data to the Xn interface of the terrestrial base station 300.

Characteristic properties of the process according to an example:
- The methods 10, 20, according to an example, are used for the uni- or bidirectional exchange of information between terrestrial and non-terrestrial base stations 300, 400.
- The connection (at least in terms of reception) between the terrestrial and non-terrestrial base station 300, 400 is established via an NTN terminal 600, which is supplied via the radio cell of the non-terrestrial base station 400. The NTN-device 600 is located at the site of the terrestrial base station 300 and is connected to the terrestrial base station 300. Uni- or bi-directional (Xn-)connections between non-terrestrial and terrestrial base stations 300, 400 can be established dynamically and without complex configuration.
- The non-terrestrial base station 400 relevant as a neighbor of the terrestrial base station 300 is determined by the NTN terminal device 600. No function is required in the network that compares the coverage areas of terrestrial and non-terrestrial base stations 300, 400 with each other and determines the neighbor relationships from this.
- For the connection between non-terrestrial and terrestrial base stations 300, 400, components with the same functionality as normal NTN terminals are required at the terrestrial base station 300. These components can be comparatively inexpensive due to the large number of end devices.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method (10) for a terrestrial base station (300) of a mobile communication system (500), the method (10) comprising
communicating (11) radio signals with user equipment, UE (62;(64)), located in one or more radio cells covered by the terrestrial base station (300);
receiving (12) a signal transmitted by a non-terrestrial base station (400) of the mobile communication system (500) using a non-terrestrial terminal, NTN, device (600) which serves the terrestrial base station (300) to receive signals from the non-terrestrial base station (400) and communicating with the NTN device (600) using a wired or a wireless link;
determining (13) one or more parameters of a radio cell generated by the non-terrestrial base station (400) based on the received signal, wherein the determining (13) comprises determining an address or a transport network address of the non-terrestrial base station (400) and wherein the method (10) further comprises establishing a link to the non-terrestrial base station (400) based on the address or transport network address.

2. The method (10) of claim 1, further comprising establishing a direct radio link with the non-terrestrial base station (400) and communicating with the non-terrestrial base station (400) using the radio link.

3. The method (10) of one of the claims 1 or 2, further comprising establishing an inter-base station -interface link to the non-terrestrial base station (400).

4. The method (10) of claim 3, wherein the inter-base station interface link is a Radio Resource Control, RRC, signaling radio bearer and wherein Xn-interface messages as inter base station interface messages are encapsulated in RRC messages according to the 3rd Generation Partnership Project, 3GPP, provisions.

5. The method (10) of one of the claims 1 to 4, further comprising coordinating radio resource utilization with the non-terrestrial base station (400).

6. The method (10) of claim 5, wherein the coordinating is based on balancing a load and/or mitigating interference between the terrestrial base station (300) and the non-terrestrial base station (400).

7. The method (10) of one of the claims 5 or 6, wherein the coordinating comprises one or more feedback loops for controlling radio parameters at the non-terrestrial base station (400).

8. A method (20) for a non-terrestrial base station (400) of a mobile communication system (500), the method (20) comprising
communicating (21) radio signals with user equipment, UE (62; 64), located in one or more radio cells covered by the non-terrestrial base station (400);
transmitting (22) information indicating an address or transport network address of the non-terrestrial base station (400) to enable other base stations to establish communication with the non-terrestrial base station (400) via a transport network.

9. The method (20) of claim 8, further comprising establishing an inter-base station -interface link to a terrestrial base station (300).

10. The method (20) of claim 9, wherein the inter-base station interface link is a Radio Resource Control, RRC, signaling radio bearer and wherein Xn-interface messages as inter base station interface messages are encapsulated in RRC messages according to the 3rd Generation Partnership Project, 3GPP, provisions.

11. The method (20) of one of the claims 9 to 10, further comprising coordinating radio resource utilization with the terrestrial base station (300), wherein the coordinating is based on balancing a load and/or mitigating interference between the terrestrial base station (300) and the non-terrestrial base station (400), and wherein the coordinating comprises one or more feedback loops for controlling radio parameters at the non-terrestrial base station (400).

12. A computer program having a program code for performing one of the methods (10; 20) of one of the claims 1 to 11, when the computer program is executed on a computer, a processor, or a programmable hardware component.

13. An apparatus (30) for a terrestrial base station (300) of a mobile communication system (500), the apparatus (30) comprising
one or more interfaces (32) configured to communicate radio signals in the mobile communication system (500); and
one or more signal processing devices (34) configured to process signals communicated in the mobile communication system (500) using the one or more interfaces (32);
wherein the one or more signal processing devices (34) are further configured to perform one of the methods (10) of claims 1 to 7.

14. A terrestrial base station (300) comprising the apparatus (30) of claim 13, the apparatus (30) comprising at least a first antenna (35a) configured to serve users (64) in a radio cell covered by the terrestrial base station (300), and further comprising at least a second antenna (35b) configured to receive signals from a non-terrestrial base station (400).

15. An apparatus (40) for a non-terrestrial base station (400) of a mobile communication system (500), the apparatus (40) comprising
one or more interfaces (42) configured to communicate radio signals in the mobile communication system (500); and
one or more signal processing devices (44) configured to process signals communicated in the mobile communication system (500) using the one or more interfaces (42);
wherein the one or more signal processing devices (44) are further configured to perform one of the methods (20) of claims 8 to 11.

## Patentansprüche

1. Ein Verfahren (10) für eine terrestrische Basisstation (300) eines Mobilkommunikationssystems (500), das Verfahren (10) umfassend
Kommunizieren (11) von Funksignalen mit einem Benutzerendgerät, UE (62;(64)), das sich in einer oder mehreren Funkzellen befindet, die von der terrestrischen Basisstation (300) abgedeckt werden;
Empfangen (12) eines Signals, das von einer nicht-terrestrischen Basisstation (400) des Mobilkommunikationssystems (500) unter Verwendung einer nicht-terrestrischen Endgerät-, NTN, Vorrichtung (600) übertragen wird, die die terrestrische Basisstation (300) bedient, um Signale von der nicht-terrestrischen Basisstation (400) zu empfangen, und Kommunizieren mit der NTN-Vorrichtung (600) unter Verwendung einer drahtgebundenen oder einer drahtlosen Verbindung;
Bestimmen (13) eines oder mehrerer Parameter einer Funkzelle, die von der nicht-terrestrischen Basisstation (400) erzeugt wird, basierend auf dem empfangenen Signal, wobei das Bestimmen (13) ein Bestimmen einer Adresse oder einer Transportnetzwerkadresse der nicht-terrestrischen Basisstation (400) umfasst und wobei das Verfahren (10) ferner ein Herstellen einer Verbindung zu der nicht-terrestrischen Basisstation (400) basierend auf der Adresse oder der Transportnetzwerkadresse umfasst.

2. Das Verfahren (10) gemäß Anspruch 1, ferner umfassend ein Herstellen einer direkten Funkverbindung mit der nicht-terrestrischen Basisstation (400) und ein Kommunizieren mit der nicht-terrestrischen Basisstation (400) unter Verwendung der Funkverbindung.

3. Das Verfahren (10) gemäß einem der Ansprüche 1 oder 2, ferner umfassend ein Herstellen einer Inter-Basisstation-Schnittstellenverbindung zu der nicht-terrestrischen Basisstation (400).

4. Das Verfahren (10) gemäß Anspruch 3, wobei die Inter-Basisstation-Schnittstellenverbindung ein Funkressourcensteuerungs-, RRC-, Signalisierungsfunkträger ist und wobei Xn-Schnittstellennachrichten als Inter-Basisstation-Schnittstellennachrichten in RRC-Nachrichten gemäß den 3rd Generation Partnership Project-, 3GPP-, Bestimmungen eingekapselt sind.

5. Das Verfahren (10) gemäß einem der Ansprüche 1 bis 4, ferner umfassend ein Koordinieren einer Funkressourcennutzung mit der nicht-terrestrischen Basisstation (400).

6. Das Verfahren (10) gemäß Anspruch 5, wobei das Koordinieren auf einem Ausgleichen einer Last und/oder einem Abschwächen einer Interferenz zwischen der terrestrischen Basisstation (300) und der nicht-terrestrischen Basisstation (400) basiert.

7. Das Verfahren (10) gemäß einem der Ansprüche 5 oder 6, wobei das Koordinieren eine oder mehrere Rückkopplungsschleifen zum Steuern von Funkparametern an der nicht-terrestrischen Basisstation (400) umfasst.

8. Ein Verfahren (20) für eine nicht-terrestrische Basisstation (400) eines Mobilkommunikationssystems (500), das Verfahren (20) umfassend
Kommunizieren (21) von Funksignalen mit einem Benutzerendgerät, UE (62; 64), das sich in einer oder mehreren Funkzellen befindet, die von der nicht-terrestrischen Basisstation (400) abgedeckt werden;
Übertragen (22) von Informationen, die eine Adresse oder eine Transportnetzwerkadresse der nicht-terrestrischen Basisstation (400) angeben, um es anderen Basisstationen zu ermöglichen, eine Kommunikation mit der nicht-terrestrischen Basisstation (400) über ein Transportnetzwerk herzustellen.

9. Das Verfahren (20) gemäß Anspruch 8, ferner umfassend ein Herstellen einer Inter-Basisstation-Schnittstellenverbindung zu einer terrestrischen Basisstation (300).

10. Das Verfahren (20) gemäß Anspruch 9, wobei die Inter-Basisstation-Schnittstellenverbindung ein Funkressourcensteuerungs-, RRC-, Signalisierungsfunkträger ist und wobei Xn-Schnittstellennachrichten als Inter-Basisstation-Schnittstellennachrichten in RRC-Nachrichten gemäß den 3rd Generation Partnership Project-, 3GPP-, Bestimmungen eingekapselt sind.

11. Das Verfahren (20) gemäß einem der Ansprüche 9 bis 10, ferner umfassend ein Koordinieren einer Funkressourcennutzung mit der terrestrischen Basisstation (300), wobei das Koordinieren auf einem Ausgleichen einer Last und/oder einem Abschwächen einer Interferenz zwischen der terrestrischen Basisstation (300) und der nicht-terrestrischen Basisstation (400) basiert und wobei das Koordinieren eine oder mehrere Rückkopplungsschleifen zum Steuern von Funkparametern an der nicht-terrestrischen Basisstation (400) umfasst.

12. Ein Computerprogramm mit einem Programmcode zum Durchführen eines der Verfahren (10; 20) gemäß einem der Ansprüche 1 bis 11, wenn das Computerprogramm auf einem Computer, einem Prozessor oder einer programmierbaren Hardwarekomponente ausgeführt wird.

13. Eine Vorrichtung (30) für eine terrestrische Basisstation (300) eines Mobilkommunikationssystems (500), die Vorrichtung (30) umfassend
eine oder mehrere Schnittstellen (32), die ausgebildet sind, um Funksignale in dem Mobilkommunikationssystem (500) zu kommunizieren; und
eine oder mehrere Signalverarbeitungsvorrichtungen (34), die ausgebildet sind, um Signale zu verarbeiten, die in dem Mobilkommunikationssystem (500) unter Verwendung der einen oder der mehreren Schnittstellen (32) kommuniziert werden;
wobei die eine oder die mehreren Signalverarbeitungsvorrichtungen (34) ferner ausgebildet sind, um eines der Verfahren (10) gemäß den Ansprüchen 1 bis 7 durchzuführen.

14. Eine terrestrische Basisstation (300), umfassend die Vorrichtung (30) gemäß Anspruch 13, die Vorrichtung (30) umfassend zumindest eine erste Antenne (35a), die ausgebildet ist, um Benutzer (64) in einer Funkzelle zu bedienen, die von der terrestrischen Basisstation (300) abgedeckt wird, und ferner umfassend zumindest eine zweite Antenne (35b), die ausgebildet ist, um Signale von einer nicht-terrestrischen Basisstation (400) zu empfangen.

15. Eine Vorrichtung (40) für eine nicht-terrestrische Basisstation (400) eines Mobilkommunikationssystems (500), die Vorrichtung (40) umfassend
eine oder mehrere Schnittstellen (42), die ausgebildet sind, um Funksignale in dem Mobilkommunikationssystem (500) zu kommunizieren; und
eine oder mehrere Signalverarbeitungsvorrichtungen (44), die ausgebildet sind, um Signale zu verarbeiten, die in dem Mobilkommunikationssystem (500) unter Verwendung der einen oder der mehreren Schnittstellen (42) kommuniziert werden;
wobei die eine oder die mehreren Signalverarbeitungsvorrichtungen (44) ferner ausgebildet sind, um eines der Verfahren (20) gemäß den Ansprüchen 8 bis 11 durchzuführen.

## Revendications

1. Procédé (10) pour une station de base terrestre (300) d'un système de communication mobile (500), le procédé (10) comprenant le fait de
communiquer (11) des signaux radio avec un équipement utilisateur, UE (62 ; (64)), situé dans une ou plusieurs cellules radio couvertes par la station de base terrestre (300) ;
recevoir (12) un signal transmis par une station de base non terrestre (400) du système de communication mobile (500) en utilisant un dispositif de terminal non terrestre, NTN, (600) qui dessert la station de base terrestre (300) pour recevoir des signaux en provenance de la station de base non terrestre (400) et communiquer avec le dispositif NTN (600) en utilisant une liaison filaire ou sans fil ;
déterminer (13) un ou plusieurs paramètres d'une cellule radio générée par la station de base non terrestre (400) sur la base du signal reçu, dans lequel la détermination (13) comprend le fait de déterminer une adresse ou une adresse de réseau de transport de la station de base non terrestre (400) et dans lequel le procédé (10) comprend en outre le fait d'établir une liaison avec la station de base non terrestre (400) sur la base de l'adresse ou de l'adresse de réseau de transport.

2. Procédé (10) selon la revendication 1, comprenant en outre le fait d'établir une liaison radio directe avec la station de base non terrestre (400) et de communiquer avec la station de base non terrestre (400) en utilisant la liaison radio.

3. Procédé (10) selon l'une des revendications 1 ou 2, comprenant en outre le fait d'établir une liaison d'interface entre stations de base avec la station de base non terrestre (400).

4. Procédé (10) selon la revendication 3, dans lequel la liaison d'interface entre stations de base est un support radio de signalisation de commande de ressources radio, RRC, et dans lequel des messages d'interface Xn en tant que messages d'interface entre stations de base sont encapsulés dans des messages RRC selon les dispositions du projet de partenariat de 3ème génération, 3GPP.

5. Procédé (10) selon l'une des revendications 1 à 4, comprenant en outre le fait de coordonner l'utilisation de ressources radio avec la station de base non terrestre (400).

6. Procédé (10) selon la revendication 5, dans lequel la coordination est basée sur l'équilibrage d'une charge et/ou l'atténuation d'interférences entre la station de base terrestre (300) et la station de base non terrestre (400).

7. Procédé (10) selon l'une des revendications 5 ou 6, dans lequel la coordination comprend une ou plusieurs boucles de rétroaction pour commander des paramètres radio au niveau de la station de base non terrestre (400).

8. Procédé (20) pour une station de base non terrestre (400) d'un système de communication mobile (500), le procédé (20) comprenant le fait de
communiquer (21) des signaux radio avec un équipement utilisateur, UE (62 ; 64), situé dans une ou plusieurs cellules radio couvertes par la station de base non terrestre (400) ;
transmettre (22) des informations indiquant une adresse ou une adresse de réseau de transport de la station de base non terrestre (400) pour permettre à d'autres stations de base d'établir une communication avec la station de base non terrestre (400) via un réseau de transport.

9. Procédé (20) selon la revendication 8, comprenant en outre le fait d'établir une liaison d'interface entre stations de base avec une station de base terrestre (300).

10. Procédé (20) selon la revendication 9, dans lequel la liaison d'interface entre stations de base est un support radio de signalisation de commande de ressources radio, RRC, et dans lequel des messages d'interface Xn en tant que messages d'interface entre stations de base sont encapsulés dans des messages RRC selon les dispositions du projet de partenariat de 3ème génération, 3GPP.

11. Procédé (20) selon l'une des revendications 9 à 10, comprenant en outre le fait de coordonner l'utilisation de ressources radio avec la station de base terrestre (300), dans lequel la coordination est basée sur l'équilibrage d'une charge et/ou l'atténuation d'interférences entre la station de base terrestre (300) et la station de base non terrestre (400), et dans lequel la coordination comprend une ou plusieurs boucles de rétroaction pour commander des paramètres radio au niveau de la station de base non terrestre (400).

12. Programme informatique ayant un code de programme pour réaliser l'un des procédés (10 ; 20) selon l'une des revendications 1 à 11, lorsque le programme informatique est exécuté sur un ordinateur, un processeur ou un composant matériel programmable.

13. Appareil (30) pour une station de base terrestre (300) d'un système de communication mobile (500), l'appareil (30) comprenant
une ou plusieurs interfaces (32) configurées pour communiquer des signaux radio dans le système de communication mobile (500) ; et
un ou plusieurs dispositifs de traitement de signaux (34) configurés pour traiter des signaux communiqués dans le système de communication mobile (500) en utilisant la ou les interfaces (32) ;
dans lequel le ou les dispositifs de traitement de signaux (34) sont en outre configurés pour réaliser l'un des procédés (10) selon les revendications 1 à 7.

14. Station de base terrestre (300) comprenant l'appareil (30) selon la revendication 13, l'appareil (30) comprenant au moins une première antenne (35a) configurée pour desservir des utilisateurs (64) dans une cellule radio couverte par la station de base terrestre (300), et comprenant en outre au moins une deuxième antenne (35b) configurée pour recevoir des signaux d'une station de base non terrestre (400).

15. Appareil (40) pour une station de base non terrestre (400) d'un système de communication mobile (500), l'appareil (40) comprenant
une ou plusieurs interfaces (42) configurées pour communiquer des signaux radio dans le système de communication mobile (500) ; et
un ou plusieurs dispositifs de traitement de signaux (44) configurés pour traiter des signaux communiqués dans le système de communication mobile (500) en utilisant la ou les interfaces (42) ;
dans lequel le ou les dispositifs de traitement de signaux (44) sont en outre configurés pour réaliser l'un des procédés (20) selon les revendications 8 à 11.
